# EUROPÄISCHE PATENTANMELDUNG

(11) **EP 4 368 349 A1**
(43) Veröffentlichungstag der Anmeldung: **15.05.2024**
(21) Anmeldenummer: 22206047.7
(22) Anmeldetag: 08.11.2022
(51) Int. Cl.: B25F 5/00

(54) **VERRIEGELUNG FÜR EINEN AKKUMULATOR**

(71) Anmelder: Hilti Aktiengesellschaft, 9494 Schaan (LI)
(72) Erfinder: Hauser, Klaus, 86830 Schwabmünchen (DE); Seltmann, Daniel, 86899 Landsberg am Lech (DE); Ender, Moses, 86916 Kaufering (DE); Frenzel, Mathias, 86944 Unterdießen (DE); Hartmann, Markus, 87665 Mauerstetten (DE); Stanger, Robert, 87600 Kaufbeuren (DE); Holubarsch, Markus, 86899 Landsberg am Lech (DE)
(74) Vertreter: Hilti Aktiengesellschaft Corporate Intellectual Property

(57) **Zusammenfassung**

System (100) mit einer Werkzeugmaschine (1) und wenigstens einem Akkumulator (11) als Energieversorgung für die Werkzeugmaschine mit wenigstens einem Energiespeicherelement (13), enthaltend eine Verriegelungsvorrichtung (15) mit wenigstens einem Verriegelungselement (24) zum wiederlösbaren Verbinden des wenigstens einen Akkumulators mit der Werkzeugmaschine.

Die Verriegelungsvorrichtung enthält wenigstens einen Aktuator (21) zum reversiblen Bewegen des wenigstens einen Verriegelungselement von einer ersten Position in eine zweite Position, wobei in der ersten Position der Akkumulator relativ zu der Werkzeugmaschine bewegbar ist und in der zweiten Position der Akkumulator unbeweglich mit der Werkzeugmaschine verbunden ist.

## Beschreibung

Die vorliegende Erfindung betrifft ein System mit einer Werkzeugmaschine und wenigstens einem Akkumulator als Energieversorgung für die Werkzeugmaschine mit wenigstens einem Energiespeicherelement, enthaltend eine Verriegelungsvorrichtung mit wenigstens einem Verriegelungselement zum wiederlösbaren Verbinden des wenigstens einen Akkumulators mit der Werkzeugmaschine.

Des Weiteren betrifft die vorliegende Erfindung einen Akkumulator zur Verwendung in einem System mit einer Werkzeugmaschine.

Darüber hinaus betrifft die vorliegende Erfindung eine Werkzeugmaschine zur Verwendung in einem System mit wenigstens einem Akkumulator.

Ferner betrifft die vorliegende Erfindung ein Verfahren zum Steuern einer Verriegelungsvorrichtung in einem System enthaltend eine Werkzeugmaschine und wenigstens einen Akkumulator als Energieversorgung für die Werkzeugmaschine, wobei die Verriegelungsvorrichtung wenigstens einen Aktuator enthält zum reversiblen Bewegen wenigstens eines Verriegelungselements von einer ersten Position in eine zweite oder dritte Position.

Akkumulatoren als Energieversorgung für eine Werkzeugmaschine sind gemäß dem Stand der Technik weitgehend bekannt. Diese Akkumulator enthalten eine Anzahl an Energiespeicherelementen (auch Energiespeicherzellen oder Akkuzellen genannt), die zum Aufnehmen, Speichern sowie Abgeben von elektrischer Energie dienen und ausgestaltet sind. Das Aufnehmen von elektrischer Energie in die Energiespeicherelemente kann auch als Laden (bzw. Aufladen) bezeichnet werden. Das Abgeben von elektrischer Energie aus den Energiespeicherelementen kann auch als Entladen bezeichnet werden.

Ein Problem bei der Verwendung des Akkumulators an einer Werkzeugmaschine ist die ungewollte bzw. unvermeidliche Relativbewegung zwischen dem Akkumulator und der Werkzeugmaschine. Durch die Relativbewegung zwischen dem Akkumulator und der Werkzeugmaschine kann es zu einer Abnutzung an den Kontakten, einer übermäßigen Erwärmung der Kontakte kommen. Die Übertragung von elektrischer Energie von dem Akkumulator zu der Werkzeugmaschine kann dadurch beeinträchtigt bzw. reduziert werden.

Aufgabe der vorliegenden Erfindung ist das vorstehend beschriebene Problem zu lösen.

Die Aufgabe wird ebenfalls gelöst durch den Gegenstand des Anspruchs 1, 5, 6 und 9. Weitere vorteilhafte Ausführungen der Erfindung sind in den Unteransprüchen beschrieben.

Die Aufgabe wird insbesondere gelöst durch ein System mit einer Werkzeugmaschine und wenigstens einem Akkumulator als Energieversorgung für die Werkzeugmaschine mit wenigstens einem Energiespeicherelement, enthaltend eine Verriegelungsvorrichtung mit wenigstens einem Verriegelungselement zum wiederlösbaren Verbinden des wenigstens einen Akkumulators mit der Werkzeugmaschine.

Erfindungsgemäß ist vorgesehen, dass die Verriegelungsvorrichtung wenigstens einen Aktuator enthält zum reversiblen Bewegen des wenigstens einen Verriegelungselement von einer ersten Position in eine zweite Position, wobei in der ersten Position der Akkumulator relativ zu der Werkzeugmaschine bewegbar ist und in der zweiten Position der Akkumulator unbeweglich mit der Werkzeugmaschine verbunden ist.

Der Aktuator kann dabei insbesondere in Form eines elektromechanischen Aktuators ausgestaltete sein. Alternativ kann der Aktuator auch als hydraulischer oder pneumatischer Aktuator ausgestaltet sein.

Der Begriff "unbeweglich" in Zusammenhang mit der zweiten Position bedeutet, dass eine Relativbewegung zwischen dem Akkumulator und der Werkzeugmaschine auf ein Minimum beschränkt ist bzw. keine Relativbewegung zwischen dem Akkumulator und der Werkzeugmaschine stattfinden kann.

Entsprechend einem vorteilhaften Ausführungsbeispiel kann es möglich sein, dass der wenigsten eine Aktuator über eine Aktivierungseinrichtung aktivierbar ist. Die Aktivierungseinrichtung kann von einem Benutzer der Werkzeugmaschine mittels eines Eingabepanels bedienbar sein. Das Eingabepanel kann durch wenigstens einen Schalter an einer Außenwand des Gehäuses des Akkumulators ausgestaltet sein.

Gemäß einem weiteren vorteilhaften Ausführungsbeispiel kann es möglich sein, dass der wenigsten eine Aktuator über wenigstens einen Sensor aktivierbar ist. Bei dem wenigstens einen Sensor kann es sich um einen Beschleunigungssensor, Bewegungssensor, Abstandssensor, Positionssensor oder dergleichen handeln.

Entsprechend einem weiteren vorteilhaften Ausführungsbeispiel kann es möglich sein, dass die Verriegelungsvorrichtung wenigstens einen Antrieb zum translatorischen Bewegen des wenigstens einen Verriegelungselements enthält. Der Antrieb kann dabei in Form eines rotatorischen Antriebs oder Linearantriebs ausgestaltet sein.

Der rotatorische Antrieb kann dabei mit wenigstens einem Exzenter ausgestaltet sein.

Der Linearantrieb dient insbesondere zum Erzeugen einer translatorischen Bewegung und kann beispielsweise in Form eines Hebezeugs, einer Winsch, einer Zahnstange, einer Schubkette, eines Zugmitteltriebs, einer Kurvenscheibe, eines Piezomotors, einer Faltspindel, einer Gewindespindel, eines Elektrozylinders, eines Kugelgewindetriebs oder eines Rollengewindetriebs ausgestaltete sein. Der Rollengewindetrieb kann dabei insbesondere als Rollengewindetrieb mit Rollenrückführung oder mit Planetenrollengewindetrieb ausgestaltete sein.

Darüber hinaus kann der Linearantrieb auch in Form eines Hydraulikzylinders oder eines Pneumatikzylinders ausgestaltete sein.

Es ist außerdem möglich, dass der Linearantrieb auch elektromechanisch ausgestaltete ist. Der elektromechanischer Linearantrieb kann dabei beispielsweise in Form eines Linearmotors mit elektrodynamischem Wirkprinzip oder als Linearaktor ausgestaltet sein. Der Linearaktor kann dabei mit einem piezoelektrischem, elektrostatischem, elektromagnetischem, magnetostriktivem oder thermoelektrischem Wirkprinzip ausgestaltet sein.

Entsprechend einem vorteilhaften Ausführungsbeispiel kann es möglich sein, dass wenigstens ein Beschleunigungssensor enthalten ist zum Erfassen wenigstens eines Beschleunigungswertes, wobei der wenigstens eine Beschleunigungssensor mit der Verriegelungsvorrichtung verbunden ist, sodass das wenigstens eine Verriegelungselement in die erste Position bewegt wird und keine elektrische Energie mehr von dem wenigstens einen Akkumulator zu der Werkzeugmaschine gelangen kann, wenn ein erfasster Beschleunigungswert einen vorbestimmten Schwellwert erreicht.

Der Beschleunigungssensor kann in Form eines Gyro-Sensors ausgestaltet sein.

Darüber hinaus kann die Aufgabe gelöst werden durch einen Akkumulator zur Verwendung in einem System mit einer Werkzeugmaschine.

Gemäß einem weiteren vorteilhaften Ausführungsbeispiel kann es möglich sein, dass der Akkumulator wenigstens einen Beschleunigungssensor enthält zum Erfassen wenigstens eines Beschleunigungswertes, wobei der wenigstens eine Beschleunigungssensor mit der Verriegelungsvorrichtung verbunden ist, sodass das wenigstens eine Verriegelungselement in die erste Position bewegt wird und keine elektrische Energie mehr von dem wenigstens einen Akkumulator zu der Werkzeugmaschine gelangen kann, wenn ein erfasster Beschleunigungswert einen vorbestimmten Schwellwert erreicht..

Des Weitere kann die Aufgabe gelöst werden durch eine Werkzeugmaschine zur Verwendung in einem System mit wenigstens einem Akkumulator.

Gemäß einem weiteren vorteilhaften Ausführungsbeispiel kann es möglich sein, dass die Werkzeugmaschine wenigstens einen Beschleunigungssensor enthält zum Erfassen wenigstens eines Beschleunigungswertes, wobei der wenigstens eine Beschleunigungssensor mit der Verriegelungsvorrichtung verbunden ist, sodass das wenigstens eine Verriegelungselement in die erste Position bewegt wird und keine elektrische Energie mehr von dem wenigstens einen Akkumulator zu der Werkzeugmaschine gelangen kann, wenn ein erfasster Beschleunigungswert einen vorbestimmten Schwellwert erreicht.

Darüber hinaus kann die Aufgabe gelöst werden durch ein Verfahren zum Steuern einer Verriegelungsvorrichtung in einem System enthaltend eine Werkzeugmaschine und wenigstens einen Akkumulator als Energieversorgung für die Werkzeugmaschine, wobei die Verriegelungsvorrichtung wenigstens einen Aktuator enthält zum reversiblen Bewegen wenigstens eines Verriegelungselements von einer ersten Position in eine zweite oder dritte Position.

Erfindungsgemäß ist vorgesehen, dass das Verfahren die Verfahrensschritte enthält:
- Erfassen wenigstens eines Beschleunigungswertes durch einen Beschleunigungssensor;
- Vergleichen des wenigstens einen erfassten Beschleunigungswerts mit wenigstens einem ersten und zweiten Schwellwert;
- Aussenden wenigstens eines ersten Signals an den Aktuator zum Einstellen des Verriegelungselements von der ersten in die zweite Position, wenn der wenigstens eine erfasste Beschleunigungswert dem ersten Schwellwert entspricht; und
- Aussenden wenigstens eines zweiten Signals an den Aktuator zum Einstellen des Verriegelungselements von der ersten in die dritte Position, wenn der wenigstens eine erfasste Beschleunigungswert dem zweiten Schwellwert entspricht.

Weitere Vorteile ergeben sich aus der folgenden Figurenbeschreibung. In der Figur ist ein besonders bevorzugtes Ausführungsbeispiel der vorliegenden Erfindung dargestellt. Die

Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert.

Es zeigt:
- Figur 1: eine seitliche Ansicht auf ein erfindungsgemäßes System bestehend aus einer Werkzeugmaschine und einem Akkumulator;
- Figur 2: eine seitliche Ansicht auf einen erfindungsgemäßen Akkumulator mit einer schematisch dargestellten Verriegelungsvorrichtung in einer ersten Position;
- Figur 3: eine seitliche Ansicht auf den erfindungsgemäßen Akkumulator mit der schematisch dargestellten Verriegelungsvorrichtung in einer zweiten Position;
- Figur 4: eine seitliche Ansicht auf den erfindungsgemäßen Akkumulator mit der Verriegelungsvorrichtung gemäß eines ersten Ausführungsbeispiels in einer ersten Position;
- Figur 5: eine seitliche Ansicht auf den erfindungsgemäßen Akkumulator mit der Verriegelungsvorrichtung gemäß eines ersten Ausführungsbeispiels in einer zweiten Position;
- Figur 6: eine seitliche Ansicht auf den erfindungsgemäßen Akkumulator mit der Verriegelungsvorrichtung gemäß eines zweiten Ausführungsbeispiels in einer ersten Position; und
- Figur 7: eine seitliche Ansicht auf den erfindungsgemäßen Akkumulator mit der Verriegelungsvorrichtung gemäß eines zweiten Ausführungsbeispiels in einer zweiten Position.

### Ausführungsbeispiele:

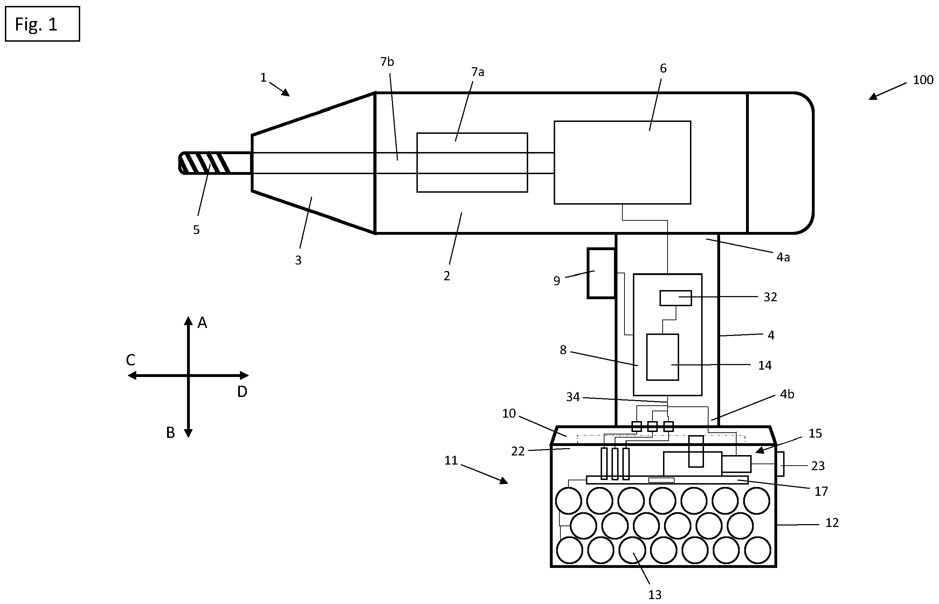

Figur 1 zeigt ein System 100 mit einer Werkzeugmaschine 1 und einen Akkumulator 11 gemäß einer beispielhaften Ausführungsform.

Die Werkzeugmaschine 1 ist in der gezeigten Ausführungsform als Bohrmaschine ausgestaltet. Alternativ kann die Werkzeugmaschine 1 auch als Bohrmaschine, einen Bohrhammer, eine Säge, ein Schleifgerät oder dergleichen ausgestaltet sein.

Wie in Figur 1 angedeutet enthält die als Bohrmaschine ausgestaltete Werkzeugmaschine 1 im Wesentlichen ein Werkzeugmaschinengehäuse 2 mit einer Werkzeugaufnahme 3 und einem Handgriff 4.

Die Werkzeugaufnahme 3 dient zum Aufnehmen und Halten eines Werkzeugs 5. Bei dem Werkzeug 5 handelt es sich in dem vorliegenden Ausführungsbeispiel um einen Bohrer. Alternativ kann das Werkzeug 5 auch als Schrauben-Bit ausgestaltet sein.

Im Inneren des Werkzeugmaschinengehäuses 2 ist unter anderem ein Antrieb 6, ein Getriebe 7a, eine Abtriebswelle 7b und eine Steuereinheit 8 vorgesehen. Der Antrieb 6 ist beispielsweise als bürstenloser Elektromotor ausgestaltet und dient zum Erzeugen eines Drehmoments.

Die Steuereinheit 8 enthält des Weiteren einen Beschleunigungssensor 14 zum Erfassen von Beschleunigungswerten. Der Beschleunigungssensor 14 dient insbesondere zum Erfassen bzw. Messen von Beschleunigungen im Falle eines Sturzes des Systems 100. Die von dem Beschleunigungssensor 14 erfassten Beschleunigungswerte werden an die Steuereinheit 8 gesendet und ausgewertet. Die Steuereinheit 8 enthält darüber hinaus einen Speicher 32, in dem Schwellwerte für die Beschleunigungswerte gespeichert sind. Wenn der Beschleunigungssensor 14 eine Beschleunigung des Systems 100 erfasst, wird der Wert der Beschleunigung mit Hilfe der Steuereinheit 8 bewertet. Hierzu wird der erfasste Beschleunigungswert mit den im Speicher hinterlegten Schwellwerten verglichen. Bei Erreichen eines Schwellwertes wird ein entsprechendes Signal von der Steuereinheit 8 ausgesendet.

Die Steuereinheit 8 regelt und steuert die Funktionen bzw. das Verhalten der Werkzeugmaschine 1 und insbesondere des Antriebs 6.

Der Handgriff 4 enthält wiederum einen Betätigungsschalter 9, ein oberes Ende 4a und ein unteres Ende 4b. Der Betätigungsschalter 9 ist mit der Steuereinheit 8 verbunden, sodass ein

Betätigen des Betätigungsschalters 9 zu einer Aktivierung des Antriebs 6 bzw. der Werkzeugmaschine 1 führt.

Wie ebenfalls in Figur 1 gezeigt, ist der Antrieb 6, das Getriebe 7a, die Abtriebswelle 7b und die Werkzeugaufnahme 3 so zueinander angeordnet, dass ein von dem Antrieb 6 erzeugtes Drehmoment über das Getriebe 7a und die Abtriebswelle 7b zu der Werkzeugaufnahme 3 gelangen kann. Durch die Werkzeugaufnahme 3 wird das vom Antrieb 6 erzeugte Drehmoment schließlich auf das Werkzeug 5 übertragen.

Das Werkzeugmaschinengehäuse 2 weist des Weiteren eine Oberseite 2a, eine Unterseite 2b, ein vorderes Ende 2c und ein hinteres Ende 2d auf.

An dem vorderen Ende 2c ist die Werkzeugaufnahme 3 positioniert. An der Unterseite 2b und in der Nähe des hinteren Endes 2d des Werkzeugmaschinengehäuses 2 ist das obere Ende 4a des Handgriffs 4 befestigt. An dem unteren Ende 4b des Handgriffs 4 ist eine Werkzeugmaschinenschnittstelle 10 positioniert. Die Werkzeugmaschinenschnittstelle 10 dient zum wiederlösbaren Verbinden der Werkzeugmaschine 1 mit dem Akkumulator 11.

Gemäß einem alternativen und in den Figuren nicht gezeigten Ausführungsbeispiel kann die Werkzeugmaschine 1 auch so ausgestaltet sein, dass diese mit mehr als einem Akkumulator 11 als Energiequelle verbunden ist.

Der in dem Ausführungsbeispiel beschriebene Akkumulator 11 kann insbesondere als Energiespeichervorrichtung bzw. elektrische Energiequelle für die Werkzeugmaschine 1 dienen. Der Akkumulator 11 enthält dabei im Wesentlichen ein Akku-Gehäuse 12, eine Anzahl an Energiespeicherelementen 13, eine Speichervorrichtung 16, Akku-Schnittstelle 22, eine Verriegelungsvorrichtung 15 sowie eine Steuerungseinrichtung 17. Des Weiteren enthält der Akkumulator 11 einen Beschleunigungssensor 18 und einen Abstandssensor 19. Der Abstandssensor 19 kann auch als Distanzsensor oder Wegsensor bezeichnet werden. In den vorliegenden Ausführungsbeispielen ist der Abstandssensor 19 in Form eines Dehnungsmessstreifen ausgestaltet. Alternativ oder aber zusätzlich zu dem Dehnungsmesstreifen kann der Abstandssensor 19 auch in Form eines Potentiometergebers, eines induktiven Sensors, eines kapazitiven Sensors und/oder eines induktiven Sensors (z.B. Differentialtransformator (LVDT), Querankergeber, Kurzschlussringgeber, Magneto-induktive Abstandssensor (MDS) oder Wirbelstromsensor) ausgestaltet sein.

Der Beschleunigungssensor 18 kann auch als Beschleunigungsmesser, Beschleunigungsaufnehmer, Vibrationsaufnehmer, Schwingungsaufnehmer, Accelerometer, Akzelerometer, B-Messer oder G-Sensor bezeichnet werden. In den vorliegenden Ausführungsbeispielen ist der Beschleunigungssensor 18 als MEMS-Beschleunigungs- und Gyrosensor (MEMS = mikro-elektro-mechanische System) ausgestaltet.

Alternativ oder aber zusätzlich hierzu kann der Beschleunigungssensor 18 auch als piezoelektrischer Beschleunigungssensor, Dehnungsmessstreifen, magnetischer Induktionssensor oder Ferraris-Sensor ausgestaltet sein.

Die Energiespeicherelemente 13 können auch als Akku-Zellen bezeichnet werden. Gemäß eines alternativen, in den Figuren nicht gezeigten Ausführungsbeispiels kann der Akkumulator 11 lediglich ein einziges Energiespeicherelement 13 enthalten.

Die Speichervorrichtung 16 ist im Inneren des Akku-Gehäuses 12 positioniert und dient zu Speichern und Bereitstellen von Daten und Informationen.

Die Akku-Schnittstelle 22 dient zum elektrischen bzw. elektronischen Verbinden des Akkumulators 11 mittels der Werkzeugmaschinenschnittstelle 10 mit der Werkzeugmaschine 1. Die Akku-Schnittstelle 22 enthält hierzu ein Pluskontakt P, ein Minuskontakt M sowie ein Kommunikationskontakt K. Der Pluskontakt P und Minuskontakt M dienen zum Übertragen elektrischer Energie von den Energiespeicherelementen des Akkumulators 11 zu den Verbrauchern (insbesondere der Antrieb 6) der Werkzeugmaschine 1. Der Kommunikationskontakt K dient wiederum zum Kommunizieren der Steuerungseinrichtung 17 des Akkumulators 11 mit der Steuereinheit 8 der Werkzeugmaschine 1. Für die Kommunikation zwischen dem Akkumulator 11 mit der Werkzeugmaschine 1 werden Daten und Informationen in Form von Signalen ausgetauscht.

Die Energiespeicherelemente 13 dienen zum Aufnehmen, Speichern und erneuten Abgeben elektrischer Energie. Wie in den Figuren angedeutet, sind die Energiespeicherelemente 13 in zylindrischer Form und auf Basis einer Lithium-Ionen-Technologie ausgestaltet.

Alternativ können die Energiespeicherelemente 13 auch auf einer anderen geeigneten Technologie basieren. Die zylindrische Form der Energiespeicherelemente 13 ist ebenfalls optional, sodass auch jede andere geeignete Form bzw. Geometrie gewählt werden kann. So ist es insbesondere auch möglich, dass die Energiespeicherelemente 13 als Pouchzellen ausgestaltet sind.

Zum wiederlösbaren mechanischen Koppeln des Akkumulators 11 mit der Werkzeugmaschine 1 enthalt das System 100 eine Schienenvorrichtung 20. Wie in den Figuren angedeutet ist die Schienenvorrichtung 20 zwischen der Akku-Schnittstelle 22 und der Werkzeugmaschinenschnittstelle 10 positioniert, sodass der Akkumulator 11 entlang der Schienenvorrichtung 20 und in Pfeilrichtung C auf die Werkzeugmaschine 1 geschoben und in Pfeilrichtung D wieder von der Werkzeugmaschine 1 entfernt (abgeschoben) werden kann. Wenn der Akkumulator 11 mit Hilfe der Schienenvorrichtung 20 mit der Werkzeugmaschine 1 gekoppelt ist, steht der Pluskontakt P, der Minuskontakt M sowie der Kommunikationskontakt K des Akkumulators 11 mit den entsprechenden Plus- und Minuskontakten P, M sowie dem Kommunikationskontakt K der Werkzeugmaschine 1 in Kontakt. Elektrische Energie sowie elektrische Signale können dann von dem Akkumulator 11 zu der Werkzeugmaschine 1 gelangen.

Die Verriegelungsvorrichtung 15 dient zum wiederlösbaren Verbinden des Akkumulators 11 mit der Werkzeugmaschine 1. Hierzu enthält die Verriegelungsvorrichtung 15 im Wesentlichen einen Aktuator 21, eine Aktivierungseinrichtung 23 und ein Verriegelungselement 24.

In den Figuren 1 bis 3 ist die Verriegelungsvorrichtung 15 gemäß einer ersten Ausführungsform im Inneren des Akkumulators 11 dargestellt. Alternativ kann die Verriegelungsvorrichtung 15 gemäß der ersten Ausführungsform auch im Inneren der Werkzeugmaschine 1 positioniert sein.

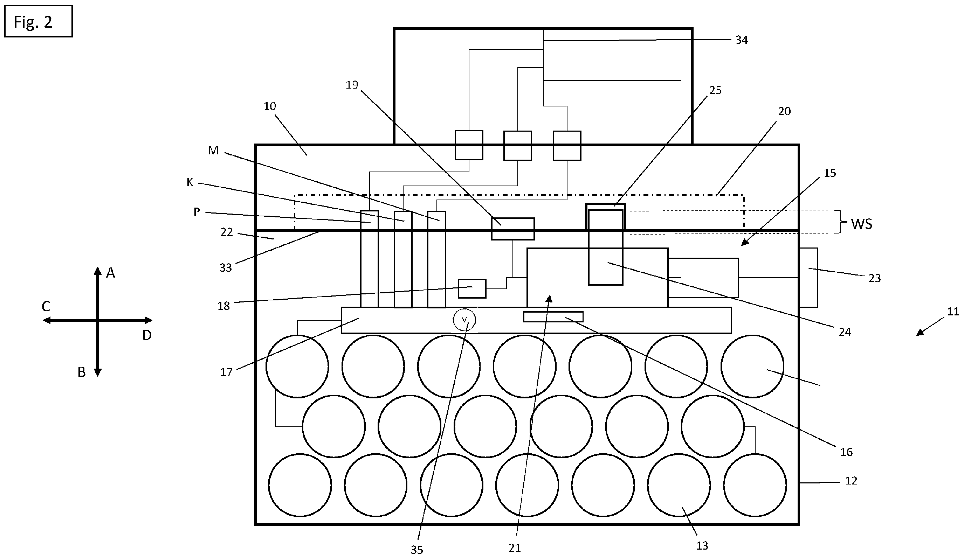

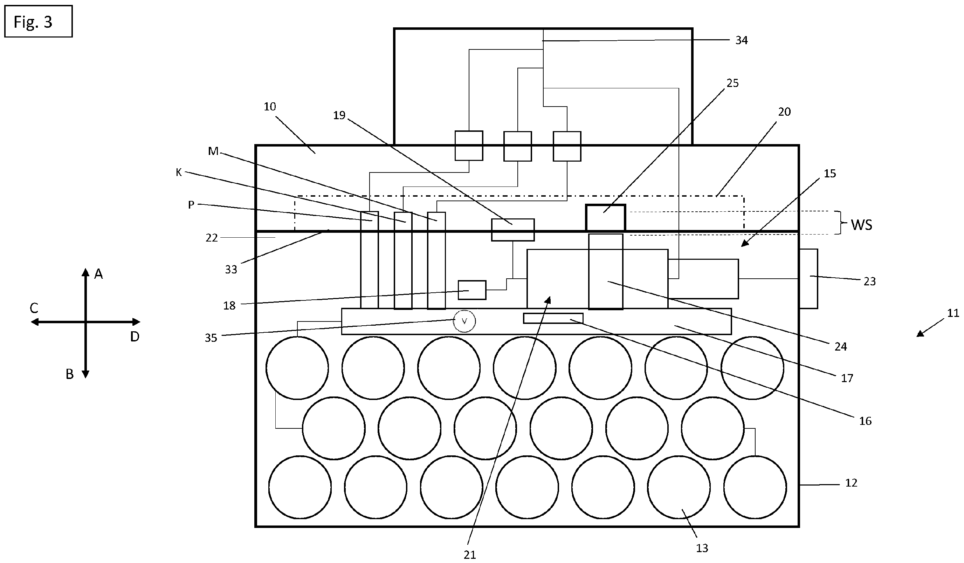

Bei der Verriegelungsvorrichtung 15 gemäß der ersten Ausführungsform ist der Aktuator 21 so ausgestaltet und positioniert, dass das Verriegelungselement 24 mittels des Aktuators 21 reversible von einer ersten Position in eine zweite Position bewegt werden kann. In Figur 1 und 2 ist das Verriegelungselement 24 in der ersten Position gezeigt. In Figur 3 ist das Verriegelungselement 24 in der zweiten Position dargestellt.

Wie in den Figuren 1 und 2 angedeutet, ist der Aktuator 21, die Aktivierungseinrichtung 23 und das Verriegelungselement 24 so zueinander angeordnet und miteinander verbunden, dass durch die Aktivierungseinrichtung 23 ein entsprechendes Signal an den Aktuator 21 gesendet werden kann.

Die Aktivierungseinrichtung 23 ist in dem vorliegenden Ausführungsbeispiel als Eingabeeinrichtung mit einem Betätigungsschalter ausgestaltet. Es können dabei ein oder mehrere Betätigungsschalter vorgesehen sein. Durch das Betätigen des Betätigungsschalters wird ein entsprechendes Signal ausgesendet.

Nach Empfang des vorbestimmten Signals bewegt der Aktuator 21 das Verriegelungselement 24. Der Aktuator 21 kann dabei das Verriegelungselement 24 entweder über eine gesamte Wegstrecke WS oder auch nur einen Teil der Wegstrecke in Richtung A oder B bewegen. Darüber hinaus kann der Aktuator 21 das Verriegelungselement 24 schrittweise in ein und dieselbe Richtung A oder B bewegen oder der Aktuator 21 bewegt das Verriegelungselement 24 in eine erste Richtung (d.h. beispielsweise Richtung A) und anschließend in eine entgegengesetzte Richtung (d.h. beispielsweise Richtung B).

In Figur 2 befindet sich das Verriegelungselement 24 in der ersten Position, wobei das Verriegelungselement 24 von dem Aktuator 21 die gesamte Wegstrecke WS in Richtung A bewegt ist und in eine entsprechend ausgestaltete Aussparung 25 in die Werkzeugmaschinenschnittstelle 10 hineinragt. Dadurch, dass das Verriegelungselement 24 in die Aussparung 25 der Werkzeugmaschinenschnittstelle 10 ragt, kann der Akkumulator 11 nicht in Richtung D entlang der Schienenvorrichtung 20 und relativ zu der Werkzeugmaschine 1 bewegt werden. Der Akkumulator 11 ist hierdurch in seiner Relativbewegung zu der Werkzeugmaschine 1 behindert bzw. fest mit der Werkzeugmaschine 1 verbunden.

Um den Akkumulator 11 wiederum von der Werkzeugmaschine 1 zu lösen bzw. zu entfernen, wird durch die Aktivierungseinrichtung 23 ein entsprechendes Signal an den Aktuator 21 gesendet. Zum Senden des entsprechenden Signals wird der Betätigungsschalter 9 erneut gedrückt. Nach Empfang des Signals bewegt der Aktuator 21 das Verriegelungselement 24 in Richtung B über die gesamte Wegstrecke WS, sodass das Verriegelungselement 24 nicht länger in die Aussparung 25 der Werkzeugmaschinenschnittstelle 10 hineinragt. Der Akkumulator 11 ist hierdurch nicht länger in seiner Bewegung entlang der Schienenvorrichtung 20 und relativ zu der Werkzeugmaschine 1 blockiert, sodass der Akkumulator 11 in Richtung D von der Werkzeugmaschine 1 geschoben werden kann.

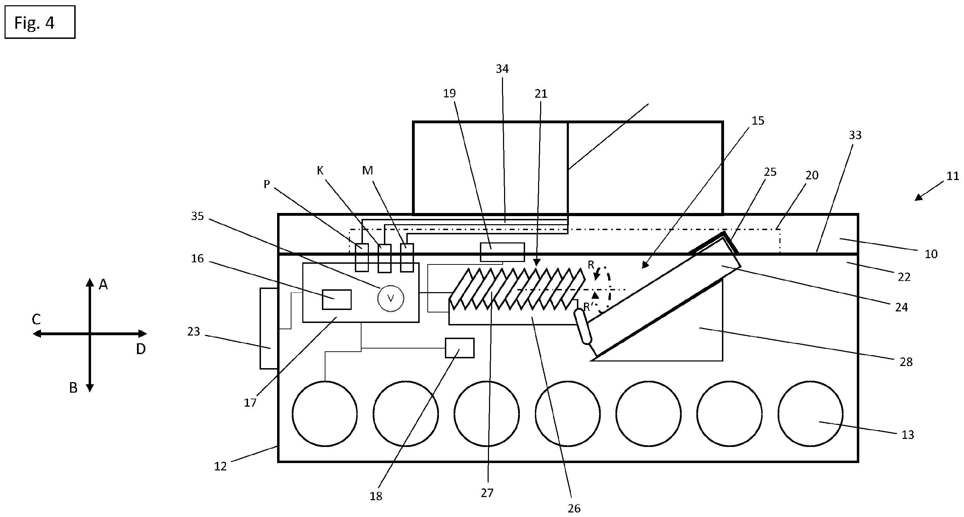

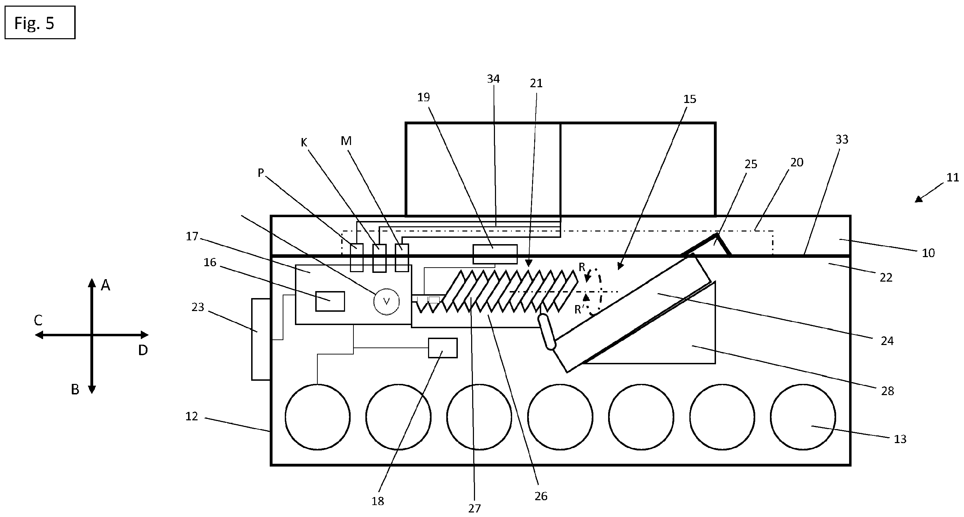

In den Figuren 4 und 5 ist die Verriegelungsvorrichtung 15 gemäß einer zweiten Ausführungsform im Inneren des Akkumulators 11 dargestellt. Alternativ kann auch die Verriegelungsvorrichtung 15 gemäß der zweiten Ausführungsform ebenfalls im Inneren der Werkzeugmaschine 1 positioniert sein.

Der Aktuator 21 gemäß der zweiten Ausführungsform ist in Form eines Linearantriebs ausgestaltet. Der Linearantrieb enthält dabei im Wesentlichen eine Zahnstange 26 und eine Schneckenwelle 27. Die Zahnstange 26 und die Schneckenwelle 27 sind dabei so zueinander positioniert bzw. angeordnet, dass durch Drehen der Schneckenwelle 27 um eine Längsachse die Zahnstange 26 bewegt werden kann. Wenn die Schneckenwelle 27 in eine erste Drehrichtung R gedreht wird, bewegt sich die Zahnstange 26 in Richtung D. Durch Drehen der Schneckenwelle 27 in eine zweite Drehrichtung R' bewegt sich die Zahnstange 26 in Richtung C. Wie in den Figuren 4 und 5 gezeigt, ist die Schneckenwelle 27 mit der Steuerungseinrichtung 17 verbunden. Die Steuerungseinrichtung 17 ist wiederum mit der Aktivierungseinrichtung 23 verbunden. Durch ein Betätigen der Aktivierungseinrichtung 23 wird ein Signal an die Steuerungseinrichtung 17 und schließlich an den Aktuator 21 gesendet. Die Zahnstange 26 ist mit einem Ende so mit dem Verriegelungselement 24 verbunden, dass das Verriegelungselement 24 entlang einer schiefen Ebene eines Keilelements 28 geschoben wird, wenn die Zahnstange 26 in Richtung D bewegt wird. Hierdurch wird ein oberes Ende des Verriegelungselements 24 in Richtung A und in eine korrespondierende Aussparung 25 in der Werkzeugmaschinenschnittstelle 10 bewegt, vgl. Figur 4. Wenn das Verriegelungselement 24 vollständig in der Aussparung 25 eingeführt ist, wird eine Relativbewegung zwischen dem Akkumulator 11 und der Werkzeugmaschine 1 unterdrückt. Wenn die Schneckenwelle 27 in Drehrichtung R' gedreht wird, bewegt sich die Zahnstange 26 in Richtung C. Hierdurch wird das Verriegelungselement 24 entlang der schiefen Ebene nach unten in Richtung B und damit vollständig aus der Aussparung 25 herausbewegt. Mit Hilfe der Aktivierungseinrichtung 23 kann die Zahnstange 26 wiederholt schrittweise in Richtung C oder wiederholt schrittweise in Richtung D bewegt werden.

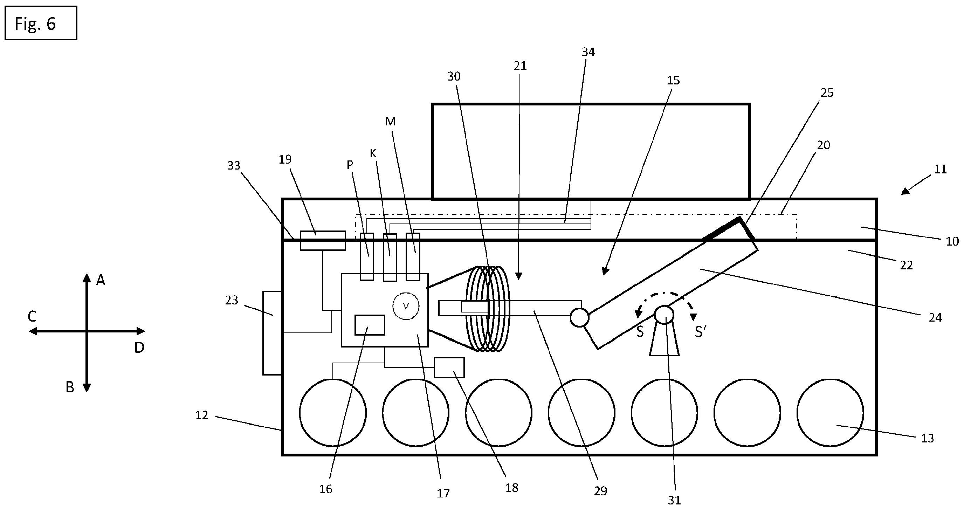

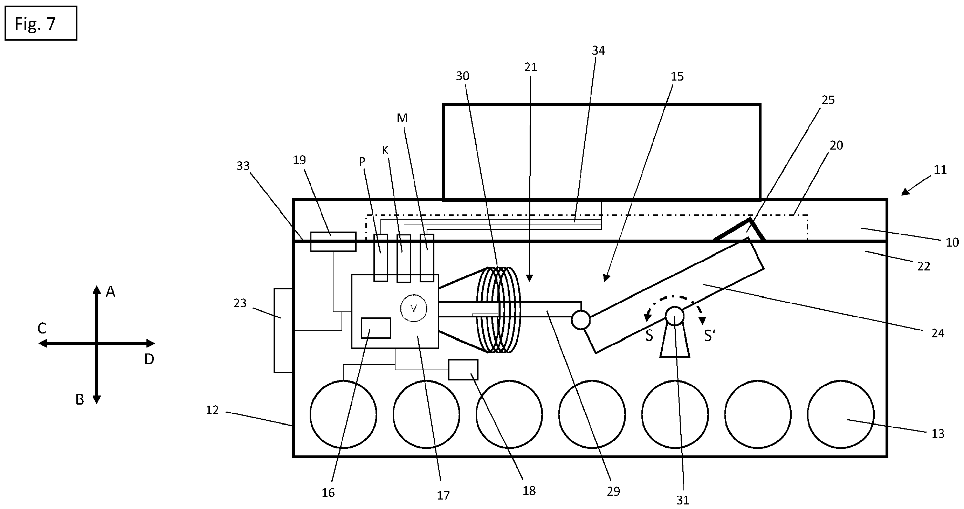

In den Figuren 6 und 7 ist die Verriegelungsvorrichtung 15 gemäß einer dritten Ausführungsform im Inneren des Akkumulators 11 dargestellt. Alternativ kann auch die Verriegelungsvorrichtung 15 gemäß der dritten Ausführungsform ebenfalls im Inneren der Werkzeugmaschine 1 positioniert sein.

Der Aktuator 21 gemäß der dritten Ausführungsform ist ebenfalls in Form eines Linearantriebs ausgestaltet. Der Linearantrieb gemäß der dritten Ausführungsform ist jedoch mit einem elektrodynamischen Wirkprinzip ausgestaltet und enthält dabei im Wesentlichen eine magnetische Schubstange 29 und eine Spule 30. Die Spule 30 ist so mit der Steuerungseinrichtung 17 verbunden, dass elektrische Energie durch die Spule 30 geleitet werden kann, sodass die magnetische Schubstange 29 entweder in Richtung C oder D bewegt wird. Ein Ende der Schubstange 29 ist mit einem Ende des Verriegelungselements 24 verbunden. Das Verriegelungselement 24 ist schwenkbar um einen Drehpunkt 31 gelagert, sodass das Verriegelungselement 24 in Drehrichtung S geschwenkt wird, wenn sich die Schubstange 29 in Richtung C bewegt.

Wenn sich die Schubstange 29 in Richtung D bewegt, wird das Verriegelungselement 24 in Drehrichtung S' geschwenkt. Wie in den Figuren 6 und 7 zu erkennen ist, bewegt sich ein Ende des schwenkbaren Verriegelungselements 24 in Richtung A und in eine Aussparung 25 in der Werkzeugmaschinenschnittstelle 10, wenn die Schubstange 29 in Richtung C und sich das Verriegelungselement 24 in Drehrichtung S dreht, vgl. Figur 6. Der Akkumulator 11 ist dann fest mit der Werkzeugmaschine 1 verbunden, sodass Relativbewegungen zwischen dem Akkumulator 11 und der Werkzeugmaschine 1 verhindert werden.

Wenn sich die Schubstange 29 in Richtung C bewegt, wird das Verriegelungselement 24 in Drehrichtung S geschwenkt. Wie in den Figuren 6 und 7 zu erkennen ist, bewegt sich ein Ende des schwenkbaren Verriegelungselements 24 in Richtung B und aus der Aussparung 25 in der Werkzeugmaschinenschnittstelle 10 heraus, vgl. Figur 7. Der Akkumulator 11 ist dann nicht mehr fest mit der Werkzeugmaschine 1 verbunden, sodass der Akkumulator 11 und die Werkzeugmaschine 1 voneinander getrennt werden können.

Der Beschleunigungssensor 18 des Akkumulators 11 ist mit der Steuerungseinrichtung 17 verbunden, sodass von dem Beschleunigungssensor 18 erfasste Beschleunigungswerte zu der Steuerungseinrichtung 17 gesendet werden können. In der Speichervorrichtung 16 sind Schwell- bzw. Grenzwerte für eine Beschleunigung gespeichert. Wenn die erfassen Beschleunigungswerte die vorbestimmten Schwellwerte erreichen, wird ein Signal von der Steuerungseinrichtung 17 an den Aktuator 21 gesendet, sodass das Verriegelungselement 24 weiter in die entsprechende Aussparung 25 der Werkzeugmaschinenschnittstelle 10 gedrückt wird. Der Akkumulator 11 wird hierdurch noch fester mit der Werkzeugmaschine 1 verbunden.

Der Abstandssensor 19 ist an einer oberen Seitenfläche 33 des Akku-Gehäuses 12 positioniert. Wenn sich der Akkumulator 11 in Verbindung mit der Werkzeugmaschine 1 befindet, ist der Abstandssensor 19 so zwischen dem Akkumulator 11 und der Werkzeugmaschine 1 positioniert, dass der Abstand zwischen dem Akkumulator 11 und der Werkzeugmaschine 1 in Form von Abstandswerten (z.B. in Millimeter (mm)) erfasst werden kann. In der Speichervorrichtung 16 sind Schwell- bzw. Grenzwerte für einen Abstand zwischen dem Akkumulator 11 und der Werkzeugmaschine 1 gespeichert. Wenn die erfassen Abstandswerte die vorbestimmten Schwellwerte erreichen, wird ein Signal von der Steuerungseinrichtung 17 an den Aktuator 21 gesendet, sodass das Verriegelungselement 24 weiter in die entsprechende Aussparung 25 der Werkzeugmaschinenschnittstelle 10 gedrückt wird. Der Akkumulator 11 wird hierdurch noch fester mit der Werkzeugmaschine 1 verbunden.

Darüber hinaus kann der Abstandssensor 19 dazu dienen, den Aktuator 21 und folglich das Verriegelungselement 24 zu aktivieren, wenn der Akkumulator 11 eine bestimmte Position zu der Werkzeugmaschine 1 einnimmt. Mit anderen Worten: wenn der Akkumulator 11 vollständig auf die Schienenvorrichtung 20 aufgeschoben und eine korrekte Position bzw. Anordnung zu der Werkzeugmaschine 1 eingenommen hat, kann dies von dem Abstandssensor 19 erfasst werden.

Wie ebenfalls in Figur 1 bis 3 gezeigt, ist der Aktuator 21 über eine Leitung 34 auch mit der Steuereinheit 8 verbunden, sodass Signale von der Steuereinheit 8 empfangen werden können. In dem Falle einer plötzlichen und relativ hohen Beschleunigung des Systems 100 wird mit Hilfe des Beschleunigungssensors 14 der Werkzeugmaschine 1 eine Wert für die Beschleunigung (d.h. Beschleunigungswert) erfasst. In der Steuereinheit 8 der Werkzeugmaschine 1 wird der erfasste Beschleunigungswert mit den im Speicher der Steuereinheit 8 hinterlegten Schwellwerten verglichen. Wenn aufgrund des Vergleichs ermittelt werden kann, dass der erfasste Beschleunigungswert einen vorbestimmten Schwellwert erreicht, wird ein entsprechendes Signal von der Steuereinheit 8 über die Leitung 34 an den Aktuator 21 der Verriegelungsvorrichtung 15 gesendet. Durch das empfangene Signal bewegt der Aktuator 21 das Verriegelungselement 24 weiter in Richtung A, sodass der Akkumulator 11 weiter in die Schienenvorrichtung 20 gedrückt und dadurch auch fester mit der Werkzeugmaschine 1 verbunden ist. Als Folge daraus werden Relativbewegungen zwischen dem Akkumulator 11 und der Werkzeugmaschine 1 verhindert.

Darüber hinaus kann eine Beschleunigung, die auf die Werkzeugmaschine 1 wirkt, mit einer Beschleunigung, die auf den Akkumulator 11 wirkt, verglichen werden. Hierzu wird der Beschleunigungswert, der von dem Beschleunigungssensor 14 der Werkzeugmaschine 1 erfasst wird, mit dem Beschleunigungswert, der von dem Beschleunigungssensor 18 des Akkumulators 11 erfasst wird, verglichen. Der Beschleunigungswert für die Werkzeugmaschine 1 wird in Form eines Signals über die Leitung 34 an die Steuerungseinrichtung 17 des Akkumulators 11 gesendet. Die Steuerungseinrichtung 17 empfängt ebenfalls die Beschleunigungswerte des Beschleunigungssensor 18 des Akkumulators 11. Durch eine Vergleich der Beschleunigungswerte des Akkumulators 11 und der Werkzeugmaschine 1 kann festgestellt werden, ob eine Differenz zwischen den jeweils erfassten Beschleunigungswerten einem vorbestimmten und in der Speichervorrichtung 16 hinterlegten Schwell- bzw. Grenzwert entspricht. Wenn die ermittelte Differenz dem vorbestimmten Schwell- bzw. Grenzwert entspricht, bedeutet dies, dass die Werkzeugmaschine 1 und der Akkumulator 11 zu hohe unterschiedliche Beschleunigungen (d.h. beispielsweise in Form von Vibrationen) erfahren, die zu Beschädigungen führen können. Als Folge daraus wird ein Signal von der Steuerungseinrichtung 17 an den Aktuator 21 gesendet, wodurch das Verriegelungselement 24 weiter und mit einer höheren Kraft in die Aussparung 25 der Werkzeugmaschinenschnittstelle 10 gedrückt wird. Hierdurch können einer Relativbewegung sowie unterschiedlichen Beschleunigungen zwischen dem Akkumulator 11 und der Werkzeugmaschine 1 entgegengewirkt werden.

Gemäß eines weiteren Ausführungsbeispiels ist eine Spannungsmesseinrichtung 35 in dem Akkumulator 11 enthalten zu Erfassen der elektrischen Spannung der Energiespeicherelemente 13. Die Spannungsmesseinrichtung 35 ist mit der Steuerungseinrichtung 17 so verbunden, dass erfasste Spannungswerte von der Spannungsmesseinrichtung 35 an die Steuerungseinrichtung 17 gesendet werden können. In der Speichervorrichtung 16 sind Schwell- bzw. Grenzwerte gespeichert. Eine Art von Schwellwert definiert eine minimale Spannung der Energiespeicherelemente 13. Wenn ein erfasster Spannungswert den Schwellwert erreicht, der eine minimale elektrische Spannung der Energiespeicherelemente 13 definiert, wird ein Signal von der Steuerungseinrichtung 17 an den Aktuator 21 gesendet, wodurch das Verriegelungselement 24 aus der Aussparung 25 der Werkzeugmaschinenschnittstelle 10 entfernt wird. Der Akkumulator 11 löst sich hierdurch von der Werkzeugmaschine 1, sodass einem Anwender der Werkzeugmaschine 1 eine minimale Spannung der Energiespeicherelemente 13 angezeigt wird.

### Bezugszeichenliste

- 100: System
- 1: Werkzeugmaschine
- 2: Werkzeugmaschinengehäuse
- 3: Werkzeugaufnahme
- 4: Handgriff
- 4a: oberes Ende des Handgriffs
- 4b: unteres Ende des Handgriffs
- 5: Werkzeug
- 6: Antrieb
- 7a: Getriebe
- 7b: Abtriebswelle
- 8: Steuereinheit
- 9: Betätigungsschalter
- 10: Werkzeugmaschinenschnittstelle
- 11: Akkumulator
- 12: Akku-Gehäuse
- 13: Energiespeicherelement
- 14: Beschleunigungssensor der Werkzeugmaschine
- 15: Verriegelungsvorrichtung
- 16: Speichervorrichtung
- 17: Steuerungseinrichtung
- 18: Beschleunigungssensor des Akkumulators
- 19: Abstandssensor
- 20: Schienenvorrichtung
- 21: Aktuator
- 22: Akku-Schnittstelle
- 23: Aktivierungseinrichtung
- 24: Verriegelungselement
- 25: Aussparung
- 26: Zahnstange
- 27: Schneckenwelle
- 28: Keilelement
- 29: Schubstange
- 30: Spule
- 31: Drehpunkt
- 32: Speicher der Werkzeugmaschine
- 33: obere Seitenfläche des Akku-Gehäuses
- 34: Leitung
- 35: Spannungsmesseinrichtung

- P: Pluskontakt
- M: Minuskontakt
- K: Kommunikationskontakt
- WS: Wegstrecke

## Patentansprüche

1. System (100) mit einer Werkzeugmaschine (1) und wenigstens einem Akkumulator (11) als Energieversorgung für die Werkzeugmaschine (1) mit wenigstens einem Energiespeicherelement (13), enthaltend eine Verriegelungsvorrichtung (15) mit wenigstens einem Verriegelungselement (24) zum wiederlösbaren Verbinden des wenigstens einen Akkumulators (11) mit der Werkzeugmaschine (1),
**dadurch gekennzeichnet, dass** die Verriegelungsvorrichtung (15) wenigstens einen Aktuator (21) enthält zum reversiblen Bewegen des wenigstens einen Verriegelungselement (24) von einer ersten Position in eine zweite Position, wobei in der ersten Position der Akkumulator (11) relativ zu der Werkzeugmaschine (1) bewegbar ist und in der zweiten Position der Akkumulator (11) unbeweglich mit der Werkzeugmaschine (1) verbunden ist.

2. System (100) nach Anspruch 1,
**dadurch gekennzeichnet, dass** der wenigsten eine Aktuator (21) über eine Aktivierungseinrichtung (23) aktivierbar ist.

3. System (100) nach Anspruch 1 oder 2,
**dadurch gekennzeichnet, dass** der wenigsten eine Aktuator (21) über wenigstens einen Sensor (14, 18, 19) aktivierbar ist.

4. System (100) nach wenigstens einen der Ansprüche 1 bis 3,
**dadurch gekennzeichnet, dass** die Verriegelungsvorrichtung (15) wenigstens einen Antrieb (6) zum translatorischen Bewegen des wenigstens einen Verriegelungselements (24) enthält.

5. System (100) nach wenigstens einen der Ansprüche 1 bis 4,
**dadurch gekennzeichnet, dass** wenigstens ein Beschleunigungssensor (14, 18) enthalten ist zum Erfassen wenigstens eines Beschleunigungswertes, wobei der wenigstens eine Beschleunigungssensor (14, 18) mit der Verriegelungsvorrichtung (15) verbunden ist, sodass das wenigstens eine Verriegelungselement (24) in die erste Position bewegt wird und keine elektrische Energie mehr von dem wenigstens einen Akkumulator (11) zu der Werkzeugmaschine (1) gelangen kann, wenn ein erfasster Beschleunigungswert einen vorbestimmten Schwellwert erreicht.

6. Akkumulator (11) zur Verwendung in einem System (100) mit einer Werkzeugmaschine (1) nach wenigstens einen der Ansprüche 1 bis 5.

7. Akkumulator (11) nach Anspruch 6,
**dadurch gekennzeichnet, dass** wenigstens ein Beschleunigungssensor (18) enthalten ist zum Erfassen wenigstens eines Beschleunigungswertes, wobei der wenigstens eine Beschleunigungssensor (18) mit der Verriegelungsvorrichtung (15) verbunden ist, sodass das wenigstens eine Verriegelungselement (24) in die erste Position bewegt wird und keine elektrische Energie mehr von dem wenigstens einen Akkumulator (11) zu der Werkzeugmaschine (1) gelangen kann, wenn ein erfasster Beschleunigungswert einen vorbestimmten Schwellwert erreicht.

8. Werkzeugmaschine (1) zur Verwendung in einem System (100) mit wenigstens einem Akkumulator (11) nach wenigstens einen der Ansprüche 1 bis 5.

9. Werkzeugmaschine (1) nach Anspruch 8,
**dadurch gekennzeichnet, dass** wenigstens ein Beschleunigungssensor (14, 18) enthalten ist zum Erfassen wenigstens eines Beschleunigungswertes, wobei der wenigstens eine Beschleunigungssensor (14, 18) mit der Verriegelungsvorrichtung (15) verbunden ist, sodass das wenigstens eine Verriegelungselement (24) in die erste Position bewegt wird und keine elektrische Energie mehr von dem wenigstens einen Akkumulator (11) zu der Werkzeugmaschine (1) gelangen kann, wenn ein erfasster Beschleunigungswert einen vorbestimmten Schwellwert erreicht.

10. Verfahren zum Steuern einer Verriegelungsvorrichtung (15) in einem System (100) enthaltend eine Werkzeugmaschine (1) und wenigstens einen Akkumulator (11) als Energieversorgung für die Werkzeugmaschine (1), wobei die Verriegelungsvorrichtung (15) wenigstens einen Aktuator (21) enthält zum reversiblen Bewegen wenigstens eines Verriegelungselements von einer ersten Position in eine zweite oder dritte Position, **gekennzeichnet durch** die Verfahrensschritte:
- Erfassen wenigstens eines Beschleunigungswertes durch einen Beschleunigungssensor (14, 18);
- Vergleichen des wenigstens einen erfassten Beschleunigungswerts mit wenigstens einem ersten und zweiten Schwellwert;
- Aussenden wenigstens eines ersten Signals an den Aktuator (21) zum Einstellen des Verriegelungselements (24) von der ersten in die zweite Position, wenn der wenigstens eine erfasste Beschleunigungswert dem ersten Schwellwert entspricht; und
- Aussenden wenigstens eines zweiten Signals an den Aktuator (21) zum Einstellen des Verriegelungselements (24) von der ersten in die dritte Position, wenn der wenigstens eine erfasste Beschleunigungswert dem zweiten Schwellwert entspricht.
